# EUROPÄISCHE PATENTANMELDUNG

(11) **EP 2 527 231 A2**
(43) Veröffentlichungstag der Anmeldung: **28.11.2012**
(21) Anmeldenummer: 12003903.7
(22) Anmeldetag: 18.05.2012
(51) Int. Cl.: B62D 21/11, B62D 29/04

(54) **Achsträger aus Faserwerkstoff verstärktem Kunststoff für Kraftfahrzeuge**

(30) Priorität: 24.05.2011 DE 102011102467
(71) Anmelder: Audi AG, 85045 Ingolstadt (DE)
(72) Erfinder: Leibl, Peter, 85077 Manching (DE)
(74) Vertreter: Asch, Konrad

(57) **Zusammenfassung**

Achsträger für ein Kraftfahrzeug, bestehend aus einer Oberschale und einer Unterschale, die miteinander verbunden sind und die zwischen sich wenigstens einen zumindest abschnittsweise mit einem ausgehärteten Material gefüllten Hohlraum bilden, wobei die Oberschale (2) und die Unterschale (3) aus einem mit einem Faserwerkstoff (6) verstärkten thermoplastische Kunststoff (4) bestehen.

## Beschreibung

Die Erfindung betrifft einen Achsträger für ein Kraftfahrzeug, bestehend aus einer Oberschale und einer Unterschale, die miteinander verbunden sind und die zwischen sich wenigstens einen zumindest abschnittsweise mit einem ausgehärteten Material gefüllten Hohlraum bilden.

Bekannte Achsträger werden entweder aus Stahl oder Aluminium hergestellt. Dies kann entweder mittels zweier verbundener Halbschalen, also einer Ober- und einer Unterschale erfolgen, oder durch formtechnische Herstellung aus Rohren. Ein Beispiel für einen Achsträger aus miteinander verbundenen Halbschalen ist aus DE 10 2004 055 100 A1 bekannt. Dort werden zwei gleichartig konfigurierte Schalen aus Stahlblech verwendet, die in kongruenter Zuordnung durch einen Schaumklebstoff miteinander verklebt sind. Insbesondere der identische Aufbau der beiden Halbschalen ist als vorteilhaft beschrieben, da nur geringe Werkzeugkosten für die Herstellung der Schalen gegeben sind. Dies ist möglich, da die beiden Schalen nur über den Klebeschaum miteinander verbunden sind, wobei die Konstruktion randseitig offen ist, das heißt, die Schalen weisen keine überlappenden oder miteinander verbundenen Ränder auf.

Infolge der Ausführung der Schalen aus Metall weist der bekannte Achsträger ein beachtliches Gewicht auf. Problematisch ist ferner, dass etwaige Befestigungsmittel wie Konsolen und Ähnliches separat an dem Achsträger befestigt werden müssen.

Der Erfindung liegt damit das Problem zugrunde, einen Achsträger anzugeben, der einerseits hinsichtlich des Gewichts reduziert ist, andererseits aber eine große Freiheit hinsichtlich der Formgebung besitzt.

Zur Lösung dieses Problems ist bei einem Achsträger der eingangs genannten Art erfindungsgemäß vorgesehen, dass die Oberschale und die Unterschale aus einem mit einem Faserwerkstoff verstärkten thermoplastischen oder duroplastischen Kunststoff bestehen.

Anders als bisher bekannt, sind beim erfindungsgemäßen Achsträger sowohl Ober- als auch Unterschale aus einem thermoplastischen oder duroplastischen Kunststoff gefertigt, der zur Verleihung der benötigten Stabilität mit einem Faserwerkstoff, also in dem Kunststoffmaterial eingebrachten Fasern verstärkt ist. Die Ausführung der Schalen aus faserverstärktem Kunststoff ist zum einen dahingehend vorteilhaft, als sich eine doch merkliche Gewichtsreduzierung, verglichen mit Stahlschalen, erreichen lässt. Ein weiterer beachtlicher Vorteil ist, dass die Formgebung der jeweiligen Schale in hohem Maße variabel ist, nachdem die Schalen aus einem im Verarbeitungszustand flüssigen Material, nämlich dem spritz- oder gießbaren Kunststoff und den ebenfalls noch flexiblen Fasern oder infolge erhöhter Temperatur erweichter Kunststoffplatten mit integrierten Fasern gefertigt werden. Das heißt, dass es möglich ist, an der jeweiligen Schale die benötigten Formen wie beispielsweise Befestigungsmittel in Form von Konsolen, Stege zur Versteifung etc. auszubilden, die im Hinblick auf den Einsatzzweck respektive die mechanischen Gegebenheiten bzw. Erfordernisse vonnöten sind. Da auch beim erfindungsgemäßen Achsträger der zwischen der Ober- und Unterschale gebildete Hohlraum zumindest abschnittsweise mit einem ausgehärteten Material gefüllt ist, kann durch Verwendung eines entsprechenden Füllmaterials auch die gewünschte Steifigkeit erreicht werden. Mithin besteht also beim erfindungsgemäßen Achsträger sowohl durch entsprechende Auslegung der Schalen, der mechanischen Eigenschaften einerseits durch Wahl des verwendeten Thermo- oder Duroplasts, andererseits auch durch Wahl des verwendeten Faserwerkstoffs respektive der Faserverlegung, als auch durch entsprechende Wahl des verwendeten Füllmittels als auch des Grades der Hohlraumbefüllung die Möglichkeit, die mechanischen Eigenschaften, insbesondere hinsichtlich Biege- und Torsionssteifigkeit nach den gegebenen Anforderungen auszugestalten. Auch besteht selbstverständlich die Möglichkeit an den Schalen entsprechende Ränder auszubilden, längs welcher die beiden Schalen selbst unmittelbar miteinander verbunden werden können, was durch einfaches Verschweißen oder Verkleben des thermoplastischen Grundmaterials oder Verkleben des duroplastischen Grundmaterial möglich ist. Das heißt, dass sich folglich eine geschlossene Hohlraumstruktur, deren Hohlraum oder deren Hohlräume zumindest abschnittsweise gefüllt sind, ergibt, die hinreichend steif ist, in ihrer Herstellung einfach ist, gewichtsmäßig optimiert ist sowie auch in ihrer Formgebung optimiert ist.

Als Faserwerkstoff kann bevorzugt Glasfaser verwendet werden, wobei selbstverständlich auch Kohlefaser verwendet werden kann. Andere Fasern wie beispielsweise Polyethylenfasern oder Aramidfasern, also organische Fasern, oder Keramikfasern, also eine anorganische Faser, sind ebenfalls verwendbar.

Der Faserwerkstoff wird bevorzugt in Form von Matten eingebracht, alternativ können auch lose Fasern eingebracht sein. Z.B. kann als thermoplastische Ausgangswerkstoff eine Kunststoffplatte verwendet werden, die eine eingebettete Fasermatte oder lose Fasern aufweist, welche durch Einwalzen zwischen zwei Kunststoffschichten eingebracht wurde. Eine solche Kunststoffplatte kann dann in einem thermischen Formgebungsprozess in die gewünschte Form gepresst oder tiefgezogen werden. Denkbar ist grundsätzlich auch die Herstellung durch Spritzen oder Gießen, entweder mit einzugie-βenden Matten oder losen Fasern.

Als thermoplastischer Kunststoff kann beispielsweise PES, PPS, PC, POM oder PEEK verwendet werden. Als duroplastischer Kunststoff kann Epoxidharz (EP), Melaminharz (MF), Phenolharz (PF), Polyesterharz (UP), Polyimidharz (P1) oder Silikonharz (S1) verwendet werden.

Nach einer besonders vorteilhaften Erfindungsausgestaltung können an der Oberschale und/oder der Unterschale mehrere zur jeweils gegenüberliegenden Schale vorspringende Wandabschnitte vorgesehen sein, mittels welchen der Hohlraum in mehrere separate Hohlraumabschnitte, von denen zumindest ein Teil mit ausgehärtetem Material gefüllt ist, unterteilt ist. Diese

Wandabschnitte haben zweierlei Funktion. Zum einen ist der zwischen den Schalen gebildete Hohlraum oder sind die zwischen den Schalen gebildeten Hohlräume, sofern beispielsweise separate Hohlräume im Bereich der Längsträger vorgesehen sind oder Ähnliches, in entsprechende separate Hohlraumabschnitte getrennt, mithin also in kleinere Volumen aufgeteilt. Es besteht nun die Möglichkeit, diese mit auszuhärtendem Material zu füllen, mithin also lokal die Steifigkeit einzustellen, wie selbstverständlich auch alle Hohlräume gefüllt sein können. Darüber hinaus dienen diese Wandabschnitte aber auch der zusätzlichen Versteifung, da sie bevorzugt quer zur jeweiligen Längsrichtung des Hohlraums oder Hohlraumabschnitts verlaufen. Die Wandabschnitte können an beiden Schalen vorgesehen sein, so dass sie nach Zusammensetzen der Schalen aneinander liegen und sich zu einer vollständigen Wand ergänzen. Denkbar ist es aber auch, sie nur an einer Schale vorzusehen, und so auszugestalten, dass sie in der Montagestellung an der gegenüberliegenden Schalenfläche anliegen. Die Wandabschnitte oder Wände können mit den jeweils gegenüberliegenden Wandabschnitten bzw. Schalenflächen verschweißt oder verklebt, also fest verbunden sein, so dass der jeweilige darüber abgegrenzte Hohlraumabschnitt komplett geschlossen ist.

Der Hohlraum selbst kann im Bereich zweier seitlicher Längsträger und eines diese verbindenden Querträgers vorgesehen sein, wobei sich die Wandabschnitte bevorzugt quer zur Längsrichtung des Hohlraums erstrecken, so dass die Hohlraumabschnitte nebeneinander liegend angeordnet sind. Die Wandabschnitte verlaufen also quer zur jeweiligen Erstreckung des jeweiligen Hohlraums und damit auch des jeweiligen Trägers, so dass sie sehr gut aussteifend wirken. Bei der Ausrichtung der Raumlage der Wandabschnitte kann auch die in der Montagestellung eingeleitete Kraft im Betrag und/oder in ihrer Richtung berücksichtigt werden, d.h., dass die Wandabschnitte insbesondere in stärker belasteten Bereichen auch entsprechend schräg zur Trägerlängsrichtung verlaufen können, sofern dis aus Festigkeits- oder Steifigkeitsgründen zweckmäßig ist.

Ein weiterer Vorteil der Wandabschnitte, resultierend aus der erfindungsgemäßen Herstellung der Schalen aus dem faserverstärkten Kunststoff, ist ferner der, dass sie auch an Orten ausgebildet werden können, die als Krafteinleitungsstelle einer besonderen mechanischen Stabilisierung bedürfen. Das heißt, sie können damit bei der Auslegung der jeweiligen Schale dort positioniert werden, wo eine gute Kraftabstützung erforderlich ist.

Das ausgehärtete Material selbst kann ein geschäumter Kunststoff sein, wobei hierzu bevorzugt Polyurethan verwendet wird. Anstelle von Polyurethanschaum ist es aber auch denkbar, ein anderes aushärtendes oder ausgehärtetes Material zu verwenden, wie beispielsweise Epoxydharz oder einen Metallschaum oder Ähnliches.

Wie bereits beschrieben zeichnet sich der erfindungsgemäße Achsträger durch die hohe Formvariabilität der Schalenauslegung aus. Dies ermöglicht es mit besonderem Vorteil, an der Oberschale und/oder der Unterschale Befestigungsmittel zur Anbindung des Achsträgers einstückig auszuformen, mithin also integral an der Schale auszubilden. Eine gesonderte Anbringung derartiger Befestigungsmittel ist, anders als im Stand der Technik, vorteilhaft nicht erforderlich.

Ein weiterer beachtlicher Vorteil des erfindungsgemäßen Achsträger ist, dass er auch gute schwingungsdämpfende Eigenschaften aufweist. Etwaige Anregungen beispielsweise von einem Hinterachsgetriebe oder der Fahrbahn werden besser gedämpft und verhindern gegebenenfalls Lagervariationen im Achsträger wie auch möglicherweise den Einsatz etwaiger Schwingungstilger und dergleichen, verglichen mit Achsträgern aus Metall. Auch sind, da aus Kunststoff gefertigt, keinerlei Maßnahmen für einen etwaigen Korrosionsschutz erforderlich.

Weitere Vorteile, Merkmale und Einzelheiten der Erfindung ergeben sich aus dem im folgenden beschriebenen Ausführungsbeispiel sowie anhand der Zeichnungen. Dabei zeigen:
- Fig. 1: eine Perspektivansicht eines erfindungsgemäßen Achsträgers,
- Fig. 2: eine Perspektivansicht auf die Innenseite der Unterschale,
- Fig. 3: eine Perspektivansicht auf die Innenseite der Oberschale,
- Fig. 4: eine vergrößerte Detailansicht des Bereichs IV aus Fig. 3, und
- Fig. 5: eine Schnittansicht durch den Achsträger aus Fig. 1 in Richtung der Linie V-V als Prinzipdarstellung.

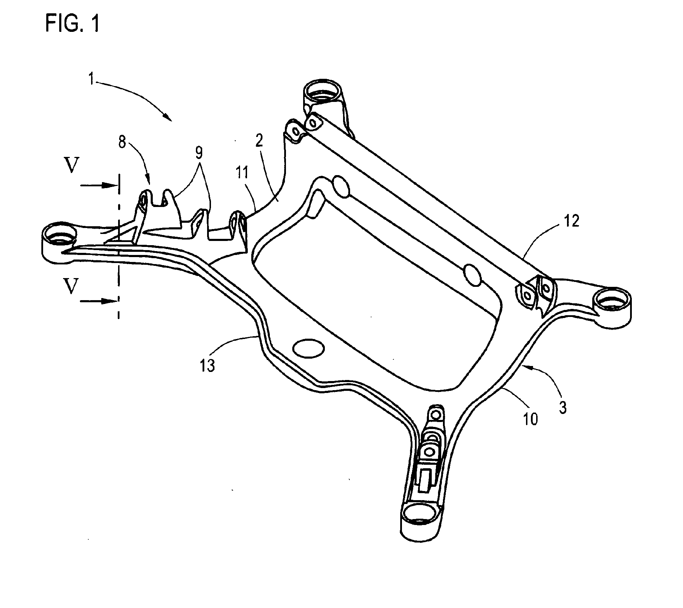

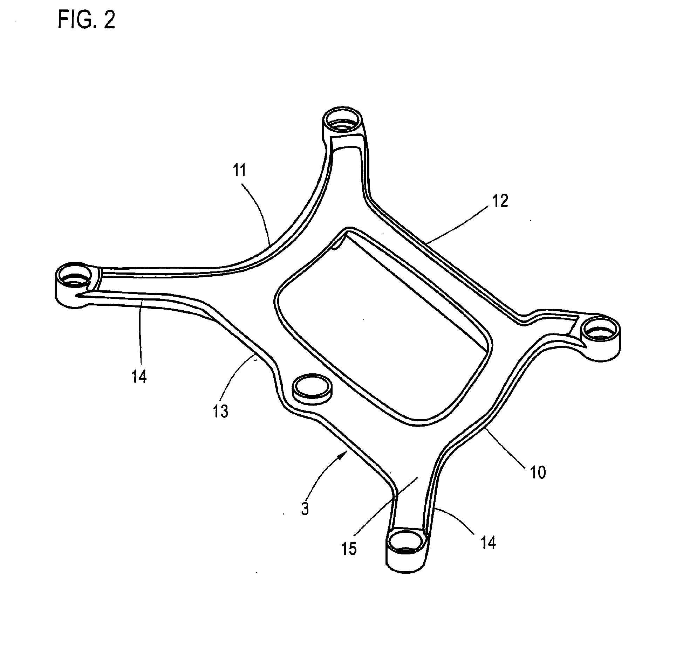

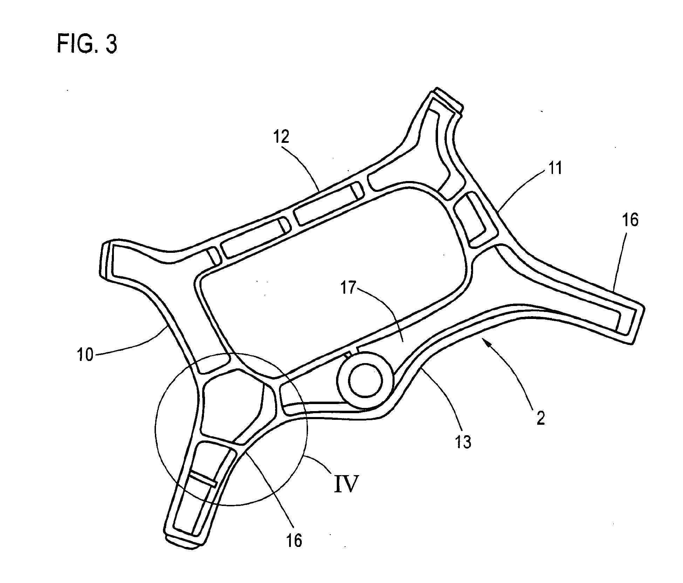

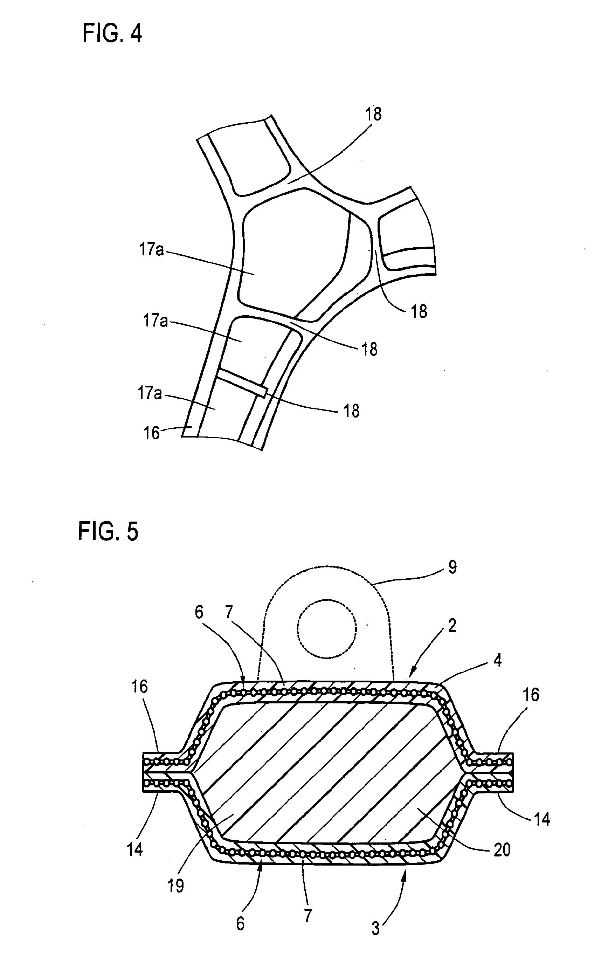

Fig. 1 zeigt einen erfindungsgemäßen Achsträger 1, bestehend aus einer Oberschale 2 und einer Unterschale 3, wie sie in den Fig. 2 und 3 näher gezeigt sind. Beide Schalen 2, 3 bestehen aus einem in einem Gieß- oder Spritz- oder Preßverfahren verarbeiteten thermoplastischen Kunststoff 4, der jeweils über einen Faserwerkstoff 6 verstärkt ist (siehe Fig. 5). Bei diesem Faserwerkstoff 6 handelt es sich bevorzugt um Glasfasermatten 7, die vollständig in den thermoplastischen Kunststoff 4 eingebettet sind. Alternativ kann statt des thermoplastischen Kunststoffs auch ein duroplastischer Kunststoff als Basismaterial verwendet werden.

Die Herstellung aus einem fluid oder erweicht verarbeitbaren Kunststoff ermöglicht es, durch entsprechende Ausgestaltung der Verarbeitungsform an einer Schale, hier bevorzugt die Oberschale 2, oberseitig Befestigungsmittel 8, z. B. Konsolen 9, integral auszubilden, mithin also einstückig aus eben dem Kunststoff 4, gegebenenfalls ebenfalls faserverstärkt, auszubilden, wie natürlich auch, siehe nicht zuletzt Fig. 1, beliebige andere Formgebungen möglich sind und insbesondere auch beliebige Radien und Ähnliches herstellbar sind.

Fig. 1 zeigt lediglich ein Ausführungsbeispiel eines solchen erfindungsgemäßen Achsträgers 1. Der Achsträger 1 besteht im gezeigten Beispiel aus zwei Längsträgern 10, 11, die über zwei Querträger 12, 13 miteinander verbunden sind. Die Enden der jeweiligen Längsträger 10, 11 ragen leicht schräg nach außen ab, wobei die Formgebung natürlich insofern beliebig ist, als sie sich nach den baulichen Gegebenheiten des Kraftfahrzeugs, wo der Achsträger einzubauen ist, richten. Es ist natürlich auch denkbar, nur einen Querträger vorzusehen und Ähnliches.

Fig. 2 zeigt eine Perspektivansicht einer Unterschale 3 mit Blick auf ihre Innenseite. Die Unterschale 3 weist beim beschriebenen Ausführungsbeispiel im Bereich der Längsträger 10, 11 einen Rand 14 auf, wobei der Rand 14 auch den Querträger 13 begrenzt. Es bildet sich folglich eine Vertiefung 15 aus, die sich, wie Fig. 2 zeigt, im Wesentlichen über die Länge des Längsträgers wie auch den Querträger 13 als auch zum Teil in dem Bereich des Querträgers 12 erstreckt.

Eine entsprechende Perspektivansicht mit Blick auf die Innenseite der Oberschale 2 zeigt Fig. 3. Auch Fig. 3 zeigt im Bereich der Längsträger 10, 11 entsprechende Ränder 16, die sich ebenfalls in den Bereich des Querträgers 13 erstrecken. Das heißt, dass sich auch hier eine Vertiefung 17 ausbildet, die über die Ränder 16 begrenzt ist. Der Verlauf der Ränder 16 respektive der Vertiefung 17 kann kongruent zur Vertriefung 15 der Unterschale 3 sein, muss es aber nicht.

Wesentliches Merkmal der hier gezeigten Oberschale 3 ist, dass im gezeigten Beispiel im Bereich der Längsträger 10, 11 jeweils mehrere Wandabschnitte 18 vorgesehen sind, die die Vertiefung 17 in mehrere separate Abschnitte 17a unterteilen. Diese Wandabschnitte sind im gezeigten Beispiel als vorspringende Stege ausgebildet, die zwischen den Rändern 16 verlaufen und bei Zusammensetzen der Oberschale und der Unterschale 3 zur Unterschale 3 hin vorspringen und sich an die dortige Gegenfläche anlegen. Mit dieser sind sie durch ein geeignetes Verbindungsverfahren wie Verscheißen oder Verkleben fest verbunden. Hierüber wird also auch der insgesamt aus Ober- und Unterschale 2, 3 gebildete Hohlraum 19 zwischen den Schalen (definiert über die beiden Vertriefungen 15 und 17 der Schalen) in entsprechende Hohlraumabschnitte aufgeteilt.

Die Wandabschnitte 18 dienen also der Unterteilung des sich bildenden Hohlraums 19, wie sie natürlich auch versteifend wirken. Sie können, da die jeweilige Schale in ihrer Formgebung quasi beliebig gewählt werden kann, auch an beliebiger Stelle positioniert werden, insbesondere in Bereichen, wo Kräfte eingeleitet werden. Im gezeigten Beispiel befinden sich die Stege 18 beispielsweise in dem Bereich, wo die Befestigungsmittel 8, hier also die Konsolen 9, an der gegenüberliegenden Schalenseite ausgeformt sind.

Zur weiteren Versteifung ist, siehe Fig. 5, in dem sich bildenden Hohlraum 19 zwischen den Schalen 2, 3 ein ausgehärtetes Material 20 eingefüllt. Bei diesem Material, das der Verbesserung der Steifigkeit dient, kann es sich beispielsweise um ausgehärtetem Polyurethanschaum handeln. Dieses Material 20 wird während der Verbindung der Oberschale 2 mit der Unterschale 3, die im Bereich der aneinander gegenüberliegenden Ränder 14 und 16 durch Verschweißen erfolgt, was durch ein einfaches Kunststoffschweißverfahren vorgenommen werden kann, in den Hohlraum 19 respektive die einzelnen, sich durch die Ausbildung der Wandabschnitte 18 ergebenden Hohlraumabschnitte eingebracht. Dabei ist es natürlich denkbar, je nach Anordnung respektive Verlauf und Anzahl der Wandabschnitte 18 und daraus resultierend der Anordnung und der Anzahl der Hohlraumabschnitte auch nur einen Teil derselben zu befüllen, je nachdem, wie die Steifigkeit des Achsträgers sein soll.

Anstelle eines Polyurethanschaums kann selbstverständlich auch ein anderes aushärtbares Material wie beispielsweise ein Metallschaum oder ein Epoxydharz oder Ähnliches zum Befüllen des Hohlraums verwendet werden.

Grundsätzlich besteht bei dem erfindungsgemäßen Achsträger die Möglichkeit, seine Steifigkeit bereits durch die Materialwahl zu beeinflussen. Denn es können unterschiedliche thermoplastische Kunststoffe zur Bildung der Kunststoffmatrix, die die jeweilige Schale 2, 3 bildet, verwendet werden, wie auch unterschiedliche Fasertypen, beispielsweise Glasfasern, Kohlenstofffasern oder Aramidfasern, als Faserwerkstoff, vorzugsweise in Mattenform, verwendet werden können, wobei auch die Verwendung von Matten nicht zwingend erforderlich ist. Vielmehr können auch einfache Axialgelege verwendet werden.

Daneben besteht auch die Möglichkeit, dem die Hohlraumabschnitte ausfüllenden Material, also z.B. dem PU-Schaum, ebenfalls einen seine Steifigkeit noch erhöhenden Zuschlagsstoff, beispielsweise in Form kurzer Fasern wie kurzer Glas- oder Kohlestofffasern, zuzugeben, so dass also auch der Schaum faserverstärkt ist bzw. seine mechanischen Eigenschaften hierüber eingestellt sind. Es können die gleichen Fasern wie zur Verstärkung der Schalen verwendet werden.

## Patentansprüche

1. Achsträger für ein Kraftfahrzeug, bestehend aus einer Oberschale und einer Unterschale, die miteinander verbunden sind und die zwischen sich wenigstens einen zumindest abschnittsweise mit einem ausgehärteten Material gefüllten Hohlraum bilden,
**dadurch gekennzeichnet,**
**dass** die Oberschale (2) und die Unterschale (3) aus einem mit einem Faserwerkstoff (6) verstärkten thermoplastischen oder duroplastischen Kunststoff (4) bestehen.

2. Achsträger nach Anspruch 1,
**dadurch gekennzeichnet**,
der Faserwerkstoff (6) Glasfaser, Kohlenstofffaser, Aramidfaser, Polyethylenfaser oder Keramikfaser ist.

3. Achsträger nach Anspruch 1 oder 2,
**dadurch gekennzeichnet,**
**dass** der Faserwerkstoff (6) in Form von Matten (7) oder losen Fasern eingerbacht ist.

4. Achsträger nach einem der vorangehenden Ansprüche,
**dadurch gekennzeichnet,**
**dass** der thermoplastische Kunststoff (4) PES, PPS, PC, POM, oder PEEK ist.

5. Achsträge nach einem de Ansprüche 1 bis 3,
**dadurch gekennzeichnet,**
**dass** der duroplastische Kunststoff (4) Epoxidharz, Melaminharz, Phenolharz, Polyesterharz, Polyimidharz oder Silikonharz ist.

6. Achsträger nach einem der vorangehenden Ansprüche,
**dadurch gekennzeichnet,**
**dass** an der Oberschale (2) und/oder der Unterschale (3) mehrere zur jeweils gegenüberliegenden Schale vorspringende Wandabschnitte (18) vorgesehen sind, mittels welchen der Hohlraum (19) in mehrere separate Hohlraumabschnitte, von denen zumindest ein Teil mit ausgehärtetem Material (20) gefüllt ist, unterteilt ist.

7. Achsträger nach Anspruch 6,
**dadurch gekennzeichnet,**
**dass** sich der Hohlraum (19) im Bereich zweier seitlicher Längsträger (10, 11) und eines diese verbindenden Querträgers (13) vorgesehen ist.

8. Achsträger nach einem der vorangehenden Ansprüche,
**dadurch gekennzeichnet,**
**dass** das ausgehärtete Material (20) ein geschäumter Kunststoff ist.

9. Achsträger nach Anspruch 8,
**dadurch gekennzeichnet,**
**dass** der geschäumte Kunststoff Polyurethan ist.

10. Achsträger nach einem der vorangehenden Ansprüche,
**dadurch gekennzeichnet, dass**
dass auch das ausgehärtete Material mit einem Faserwerkstoff verstärkt ist.

11. Achsträger nach Anspruch 10,
**dadurch gekennzeichnet,**
**dass** der Faserwerkstoff (6) Glasfaser, Kohlenstofffaser, Aramidfaser, Polyethylenfaser oder Keramikfaser ist.

12. Achsträger nach einem der vorangehenden Ansprüche,
**dadurch gekennzeichnet,**
**dass** an der Oberschale (2) und/oder der Unterschale (3) Befestigungsmittel (8) zur Anbindung des Achsträgers (1) einstückig ausgeformt sind.
